# EUROPEAN PATENT SPECIFICATION

(11) **EP 3 288 250 B1**
(45) Date of publication and mention of the grant of the patent: **14.10.2020**
(21) Application number: 16782933.2
(22) Date of filing: 25.03.2016
(51) Int. Cl.: G03B 17/02, H04N 5/225

(54) **IMAGING DEVICE**
BILDGEBUNGSVORRICHTUNG
DISPOSITIF D'IMAGERIE

(30) Priority: 24.04.2015 JP 2015088891
(43) Date of publication of application: 28.02.2018
(73) Proprietor: Hitachi Automotive Systems, Ltd., Hitachinaka-shi, Ibaraki 312-8503 (JP)
(72) Inventor: KOMORI Fumiaki, Hitachinaka-shi Ibaraki 312-8503 (JP); ISONO Tadashi, Hitachinaka-shi Ibaraki 312-0062 (JP)
(74) Representative: MERH-IP Matias Erny Reichl Hoffmann Patentanwälte PartG mbB
(86) International application number: PCT/JP2016/059532
(87) International publication number: WO 2016/170911

(56) References cited:
- JP-A- H07 225 421
- JP-A- H11 191 662
- JP-A- 2006 186 936
- JP-A- 2006 211 049
- JP-A- 2010 128 386
- JP-A- 2011 024 089
- JP-A- 2012 075 778
- US-A1- 2009 316 008

## Description

### Technical Field

The present invention relates to an imaging device.

### Background Art

Conventionally, there has been proposed an imaging device having a structure in which an imaging substrate and another substrate are connected by a cable (For example, PTL 1). PTL 2 shows a curved flat cable for electrically connecting a cards cage and a charged coupled device. In PTL 3 an endoscope is disclosed which comprises an imaging holder, a driving substrate, driving force transmission mechanisms, a driving device, a support shaft, a relay holder and cover members. PTL 4 discloses an electronic camera which images an object image and includes: an imaging element bracket; a housing and circuit boards arranged on the rear side of the imaging element bracket and for capturing and processing an image signal generated by the imaging element. PTL 5 presents an optical block which includes a color separation prism, three image pick-up means and flexible printed circuit boards for connecting the three image pick-up means with an image processing circuit board. In PTL 6 an FPC board is arranged along an inclined sidewall surface of a roof prism, constituting a finder optical system and a rigid board arranged so as to nearly orthogonally cross the FPC board.
PTL 7 shows a shake correction device including a holding frame unit, a rotating frame unit, a pin, a rotary bearing, a first rotational drive, a second rotational drive and a rotational drive controller. PTL 8 discloses a printed board which is equipped with a mounting part, where a part which requires a position adjustment to a prescribed equipment main body is mounted and an arm which connects the main part of the printed board with the mounting part. PTL 9 presents an image pickup element in an image pickup apparatus having a prism for separating incident light into three primary color lights and an image pickup element for converting the primary color light provided for each of the separated three primary color lights into image pickup signals.

### Citation List

### Patent Literature

PTL 1: JP 2014-157309 A
PTL 2: US 2009/316008 A1
PTL 3: JP 2012 075778 A
PTL 4: JP 2006 211049 A
PTL 5: JP 2006 186936 A
PTL 6: JP H07 225421 A
PTL 7 JP 2010 128386 A
PTL 8: JP H11 191662 A
PTL 9: JP 2011 024089 A

### Summary of Invention

### Technical Problem

Incidentally, in a structure in which an imaging substrate and another substrate are connected by a cable, the cable is usually made as short as possible in consideration of noise resistance. In particular, in a case where an imaging substrate is secured to another substrate as in PTL 1, since the relative positional relationship between the imaging substrate and the other substrate is determined beforehand, the necessity of the cable having an excess length is low. In addition, in a structure in which an imaging substrate and another substrate are connected linearly, it is a great advantage that the substrates can be connected to each other by a cable at the shortest distance. Therefore, the cable is made as short as possible.

However, even though a cable connecting an imaging substrate and another substrate is preferably short from the viewpoint of noise resistance, there is a drawback that manufacturing workability is inferior.

Therefore, an object of the present invention to provide an imaging device in which an imaging substrate and another substrate are connected by a cable and which can satisfactorily suppress the influence of noise caused by the cable while achieving improved manufacturing workability.

### Solution to Problem

The aforementioned object is solved by the invention according to the independent claim 1. Further preferred developments are described by the dependent claims.

### Advantageous Effects of Invention

According to the present invention, in an imaging device in which an imaging substrate and another substrate are connected by a cable, it is possible to satisfactorily suppress the influence of noise caused by the cable while achieving improved manufacturing workability.

### Brief Description of Drawings

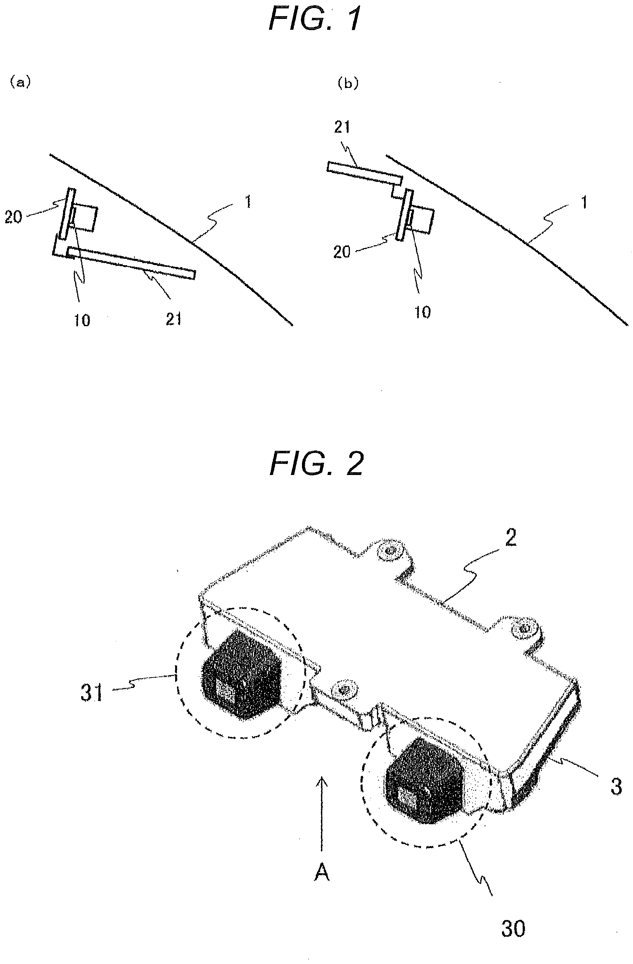

[FIG. 1] FIG. 1 is a cross-sectional view illustrating a positional relationship between an imaging substrate and a signal processing substrate in a state where an imaging device according to a first example useful for understanding the present invention of the present invention is mounted on a vehicle.
[FIG. 2] FIG. 2 is a view illustrating an outer appearance of the imaging device according to a first example useful for understanding the present invention.

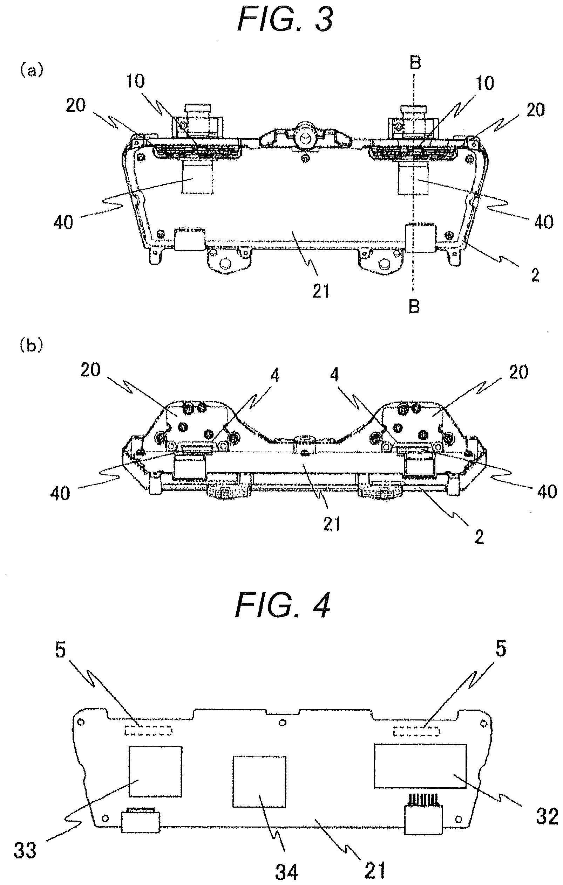

[FIG. 3] FIG. 3 is a developed view of a state where a cover of the imaging device according to a first example useful for understanding the present invention is removed, (a) is a view seen from the vertical direction, and (b) is a perspective view.
[FIG. 4] FIG. 4 is a view of a signal processing substrate of the imaging device according to a first example useful for understanding the present invention as seen from the vertical direction.

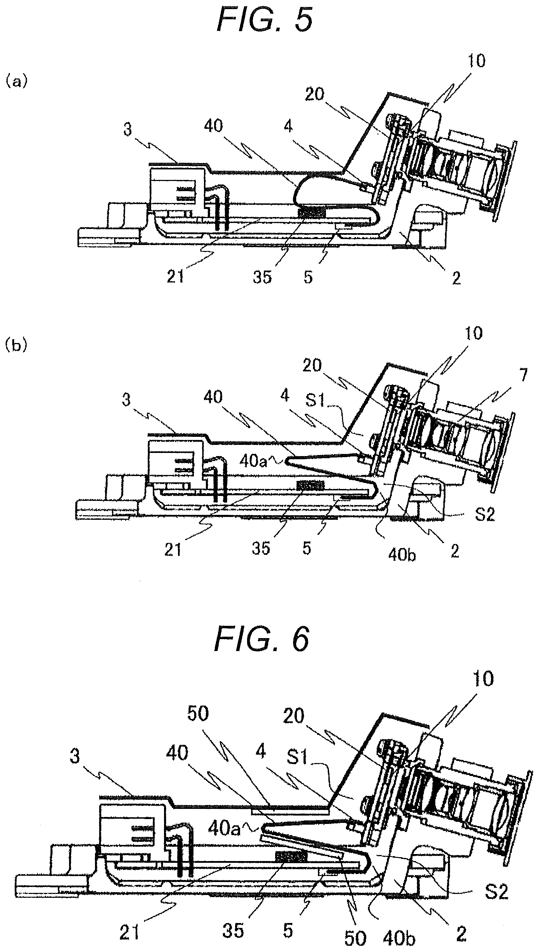

[FIG. 5] FIG. 5 is a cross-sectional view taken along line B-B in FIG. 3(a), in which (a) is a cross-sectional view in the case of using a cable to which a bending tendency is not given as a cable connecting the imaging substrate and the signal processing substrate, and (b) is a cross-sectional view in the case of using a cable having bent parts to which a bending tendency is given as a cable connecting the imaging substrate and the signal processing substrate.
[FIG. 6] FIG. 6 is a cross-sectional view illustrating a cable connecting structure between an imaging substrate and a signal processing substrate of an imaging device according to Embodiment 1, in which an insulator is disposed between a cable and an electronic component and between the cable and a cover, as compared with the structure illustrated in FIG. 5(b).

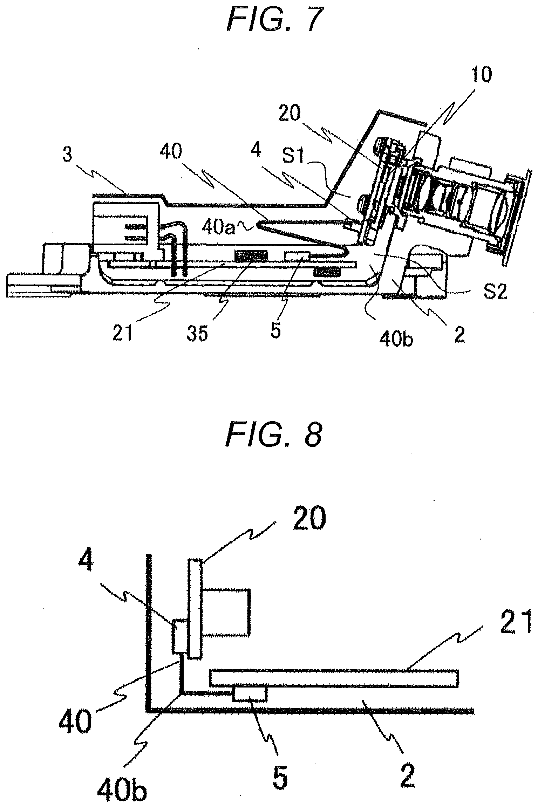

[FIG. 7] FIG. 7 is a cross-sectional view illustrating a cable connecting structure between an imaging substrate and a signal processing substrate of an imaging device according to a second example useful for understanding the present invention.
[FIG. 8] FIG. 8 is a cross-sectional view illustrating a cable connecting structure between an imaging substrate and a signal processing substrate of an imaging device according to a third example useful for understanding the present invention.

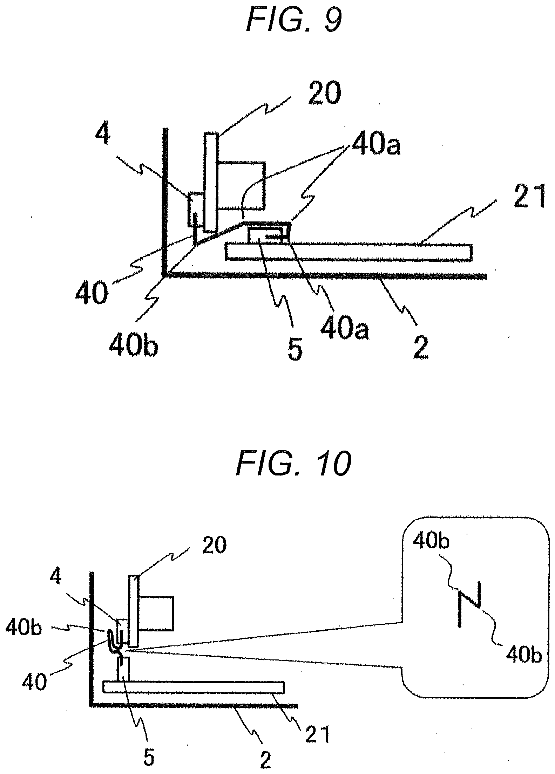

[FIG. 9] FIG. 9 is a cross-sectional view illustrating a cable connecting structure between an imaging substrate and a signal processing substrate of an imaging device according to a fourth example useful for understanding the present invention, and is a view in which a connector on the imaging substrate and a connector disposed on a surface of the signal processing substrate, the surface closer to the imaging substrate, are connected.
[FIG. 10] FIG. 10 is a cross-sectional view illustrating a cable connecting structure between an imaging substrate and a signal processing substrate of an imaging device according to a fifth example useful for understanding the present invention, and is a view illustrating a state where a connector on the imaging substrate and a connector disposed on a surface of the signal processing substrate, the surface closer to the imaging substrate, are disposed at locations overlapping each other in the vertical direction, and a cable is housed between the imaging substrate and a cover.

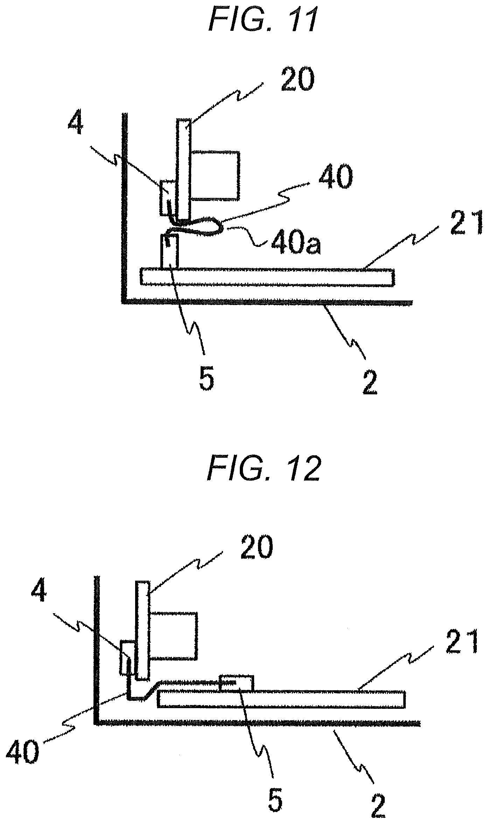

[FIG. 11] FIG. 11 is a cross-sectional view illustrating a cable connecting structure between an imaging substrate and a signal processing substrate of an imaging device according to a sixth example useful for understanding the present invention, which illustrates a connecting structure in which a cable is housed in a space formed by the imaging substrate and the signal processing substrate.
[FIG. 12] FIG. 12 is a cross-sectional view illustrating a cable connecting structure between an imaging substrate and a signal processing substrate of an imaging device according to a seventh example useful for understanding the present invention, which illustrates a connecting structure in which the cable insertion direction into a connector on the signal processing substrate is opposite to that in FIG. 9.

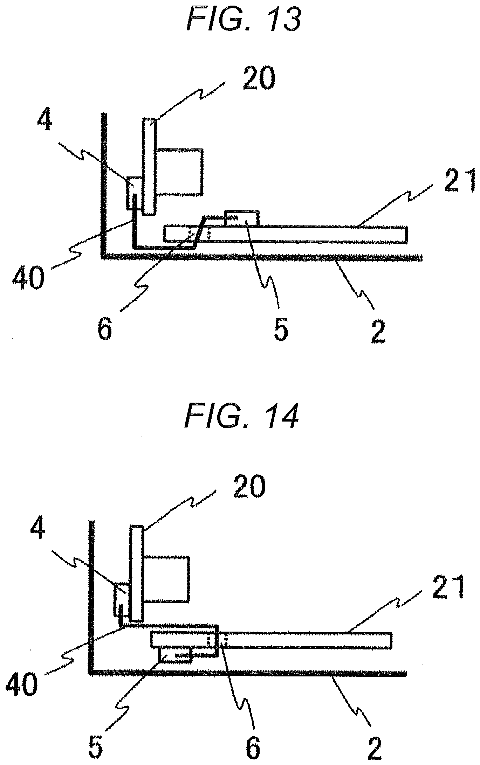

[FIG. 13] FIG. 13 is a cross-sectional view illustrating a cable connecting structure between an imaging substrate and a signal processing substrate of an imaging device according to an eighth example useful for understanding the present invention, which illustrates a structure in which a cable extends from a connector on the signal processing substrate, passes through an insertion hole provided in the signal processing substrate, and is connected to a connector on the imaging substrate.
[FIG. 14] FIG. 14 is a cross-sectional view illustrating a cable connecting structure between an imaging substrate and a signal processing substrate of an imaging device according to ninth example useful for understanding the present invention, which illustrates a structure in which a cable extends from a connector disposed on a surface of the signal processing substrate, the surface opposite to a surface of the signal processing substrate closer to the imaging substrate, passes through an insertion hole, and is connected to a connector on the imaging substrate.

### Description of Embodiments and Examples useful for understanding the present invention

Prior to a description of embodiments and examples useful for understanding the present invention, a stereo camera as an imaging device will be described. Note that in the following description, since the stereo camera is described as an example of the imaging device, the imaging device may be appropriately referred to as the "stereo camera".

In recent years, due to growing awareness of preventive safety, a stereo camera which enables accurate distance measurement has attracted attention with a view to avoiding collision against a target such as a preceding vehicle or a pedestrian by mounting the stereo camera on a vehicle and obtaining the distance to the target. In a stereo camera, a plurality of imaging elements is mounted. Furthermore, there is a growing need to mount a stereo camera not only on large and medium vehicles but also on small vehicles such as a mini vehicle. However, since a stereo camera includes two cameras and obtains the distance to a target by applying a triangulation technique on images captured by the two cameras, the stereo camera tends to become large in size. In addition, a stereo camera obtains the distance based on a displacement (parallax) of each pixel of images captured by the two cameras. Depending on optical axis deviation due to a design or manufacturing error, characteristic variation of the imaging element due to heat, noise or the like, accuracy of the obtained distance may be lowered.

Hereinafter, embodiments and examples useful for understanding the present invention of a compact stereo camera according to the present example useful for understanding the present invention will be described in detail below with reference to the drawings. FIG. 1 is a view illustrating a positional relationship between an imaging substrate 20 including an imaging element 10 and a signal processing substrate 21 on which a processing circuit which processes a signal from the imaging element 20 is mounted, in a stereo camera mounted in a vehicle. FIG. 1(a) is a cross-sectional view of the stereo camera in a case where the imaging substrate 20 is located behind the signal processing substrate 21. FIG. 1(b) is a cross-sectional view in a case where the imaging substrate 20 is located in front of the signal processing substrate 21. Note that the signal processing substrate may also be referred to as a main substrate. Note that downsizing of the stereo camera can be realized by disposing a plurality of imaging substrates 20 at locations overlapping the signal processing substrate 21 and shortening the base line length.

FIG. 2 is a view illustrating the outer appearance of the stereo camera according to the present example useful for understanding the present invention. This stereo camera is configured of a first imaging unit 30 (left imaging unit), a second imaging unit 31 (right imaging unit), and a housing (a holding member 2 and a cover 3) in which the first imaging unit 30 is disposed on one side and the second imaging unit 31 is disposed on the other side. The stereo camera generates a distance image by calculating parallax from images captured by the first imaging unit 30 and the second imaging unit 31, and recognizes a target in front of the vehicle based on the distance image. At that time, recognition accuracy can be improved by disposing the first imaging unit 30 and the second imaging unit 31 such that the optical axes of the first imaging unit 30 and the second imaging unit 31 are parallel to each other. Therefore, it is preferable that the optical axis can be adjusted for each imaging substrate.

FIG. 3 is a developed view of a state where the cover 3, which is part of the housing of the stereo camera, is removed. FIG. 3(a) is a developed view seen from A in FIG. 2, and (b) is a perspective view. Here, the holding member 2 and the cover 3 constituting the housing are so-called metal members.

In the holding member 2, the two imaging substrates 20 (a first imaging substrate (left imaging substrate) and a second imaging substrate (right imaging substrate)) are provided. The two imaging substrates 20 include the two imaging elements 10 (a first imaging element (a left imaging element) and a second imaging element (a right imaging element)), and the connectors 4 (a first communication connecting unit and a second communication connecting unit) that are communication connecting units which each output a captured image captured by the imaging element 10 to the signal processing substrate 21 on which the processing circuit is mounted.

The two imaging substrates 20 are disposed to be bilaterally symmetric with respect to the longitudinal center of the holding member 2 and are disposed side by side along an identical plane. In addition, the two imaging substrates 20 are disposed such that the two imaging substrates 20 overlap the signal processing substrates 21 in the direction extending between the two imaging substrates. In addition, the imaging substrate 20 and the signal processing substrate 21 are disposed such that the planes along the respective substrates cross each other.

FIG. 4 is a view of the signal processing substrate 21 as seen from the vertical direction. A power supply unit 32, a video processing unit 33, and a recognition processing unit 34 are disposed on the signal processing substrate 21. Two connectors 5, which are communication connecting units with the imaging substrate 20, are provided on an opposite mounting surface (rear surface) of the signal processing substrate 21. At that time, the connector 4 provided on the imaging substrate 20 and the connector 5 provided on the signal processing substrate 21 are disposed such that the positions of the connectors in the longitudinal direction overlap each other. Specifically, the connector 4 of the imaging substrate 20 and the connector 5 of the signal processing substrate 21 are disposed so as to have a positional relationship in which regions in the longitudinal direction of the connector 4 and the connector 5 overlap each other in a crossing direction crossing the longitudinal direction.

In a case where the connector 4 of the imaging substrate 20 and the connector 5 of the signal processing substrate 21 are disposed so as to overlap each other in the longitudinal direction of the connectors, since the connector 4 and the connector 5 are in a so-called linear arrangement, it is conceivable to take advantage of proximity of the connectors to make the cable 40 as short as possible. In contrast, considering connection workability between the connectors, a longer cable 40 is easier to handle.

FIG. 5 is a cross-sectional view taken along line B-B of FIG. 3(a), and the cover 3 is also illustrated here. In this example, a relatively long cable 40 is used in consideration of connection workability. FIG. 5(a) is a cross-sectional view in a case where the connector 4 of the imaging substrate 20 and the connector 5 of the signal processing substrate 21 are connected and assembled without particularly improving a cable 40. FIG. 5(b) is a cross-sectional view in a case where a cable 40 connecting the connector 4 and the connector 5 has bent parts 40a, 40b to which a bending tendency is given (which are bent).

In the example of FIG. 5(b), the two bent parts 40a, 40b are formed on the cable 40.

The bent part 40a is disposed in a space S1 surrounded by the imaging substrate 20 and the signal processing substrate 21. In a case where the cover 3 is attached, the space S1 is a space surrounded by the imaging substrate 20, the signal processing substrate 21, and the cover 3.

In addition, the bent part 40b is disposed in a space S2 surrounded by the imaging substrate 20, the signal processing substrate 21, and the holding member 2. Note that in a case where it is assumed that surfaces of the imaging substrate 20 and the signal processing substrate 21, the surfaces facing the space S1, are front surfaces, the space S2 is a space surrounded by rear surfaces opposite to the front surfaces of the imaging substrate 20 and the signal processing substrate 21 and the holding member 2.

In addition, the cable 40 has a so-called S shape where the cable 40 is secured to the signal processing substrate 21 at one end, is directed toward the imaging substrate 20, is folded back in front of the imaging substrate 20, is directed away from the imaging substrate 20, is folded back again, and is secured to the imaging substrate 20 at the other end.

In the case of FIG. 5(a), since the cable 40 does not have a bent part to which a bending tendency is given, the cable 40 is naturally curved due to a force of returning to a flat shape. At that time, the storage form of the cable 40 may change for each product. Furthermore, since the cable 40 comes into contact with an electronic component 35 on the signal processing substrate 21, noise and heat from the electronic component 35 are transmitted to the imaging substrate 20, and thus characteristic variation of the imaging element 10 occurs and parallax accuracy deteriorates. Similarly, the cable 40 also comes into contact with the conductive cover 3, which lowers parallax accuracy for the same reason.

In contrast, in FIG. 5(b), since the connector 4 and the connector 5 are connected to each other by the cable 40 having the bent parts to which a bending tendency is given, the cable 40 and the electronic component 35 are separated from each other and the cable 40 and the cover 3 are separated from each other. Therefore, the influence of noise and heat can be eliminated. Note that as the cable 40, a cable which is bent and to which a bending tendency is given before connecting the connector 4 and the connector 5, or a cable which is bent and to which a bending tendency is given after connecting the connector 4 and the connector 5 may be used. Whether or not a bending tendency is given to the cable 40 is judged based on the shape of the cable 40 in a natural state where an external force is not applied to the cable 40, the natural state being brought about, for example, by removing the cable 40 from the connectors 4 and 5. In a case where the shape does not become flat even in the natural state, it can be judged that a bending tendency is given.

In addition, in the imaging device according to the present example useful for understanding the present invention, the imaging substrate 20, the signal processing substrate 21, and the cable 40 are separately formed, and various assembling methods are conceivable. One of the conceivable methods is as follows. One end of the cable 40 is connected to the signal processing substrate 21. Then, the signal processing substrate 21 is secured to the holding member 2, and the imaging substrate 20 is separately secured to the holding member 2. Finally, the other end of the cable 40 is connected to the imaging substrate 20. In addition to this, the following method is also conceivable. First, the cable 40 is connected to the imaging substrate 20 and the signal processing substrate 21 so as to integrate the three members. Then, the imaging substrate 20 and the signal processing substrate 21 are secured to the holding member 2. Whatever assembly method is adopted, upon assembly, the distance between the imaging substrate 20 and the signal processing substrate 21 changes since the relative positional relationship between the imaging substrate 20 and the signal processing substrate 21 changes. Therefore, the cable 40 preferably has an excess length. In contrast, since shape retainability is exhibited due to existence of the bent parts 40a, 40b after assembly, the cable 40 is well fitted and excellent in noise resistance as described above.

Normally, in a case where the imaging substrate 20 and the signal processing substrate 21 are disposed such that regions in the longitudinal direction of the connectors 4, 5 overlap each other in the crossing direction crossing the longitudinal direction as in this imaging device, the connector 4, 5 have a linear positional relationship. Therefore, the connectors 4, 5 can be connected to each other at the shortest distance. In the structure of the present example useful for understanding the present invention, in order to improve connection workability by intentionally suppressing the above-described advantage, the cable 40 is made relatively long, and the bent parts are formed in consideration of fitting of the cable 40 after completion.

In addition, the imaging substrate 20 is configured such that the relative position with respect to an optical system 7 can be adjusted in order to adjust the positional relationship between the imaging element 10 on the imaging substrate 20 and the optical system 7 (so-called optical axis adjustment). Since the cable 40 has an excess length, workability of adjustment of the relative position and the degree of freedom of an adjustment range can be enhanced. In addition, in a case where a plurality of imaging substrates is provided as in a stereo camera, the position of each of the imaging substrates 20 is adjusted with respect to the signal processing substrate 21. Therefore, the structure of the cable 40 considering both workability and shape retainability is particularly useful for a stereo camera.

As described, in the imaging device according to the present example useful for understanding the present invention in which the imaging substrate and the other substrate are connected by the cable, it is possible to satisfactorily suppress the influence of noise caused by the cable while achieving improved manufacturing workability. Furthermore, it is possible to suppress deterioration in parallax accuracy caused by the influence of noise and heat while securing workability of optical axis adjustment and to shorten the base line length so as to enable downsizing of the imaging device.

FIG. 6 is a cross-sectional view in which an insulator 50 is further disposed between the cable 40 and the electronic component 35 and between the cable 40 and the cover 3 in FIG. 5(b). Even in a structure in which the cable 40 has a folded part formed in advance, there is a possibility that the cable 40 will come in contact with the electronic component 35 or the cover 3 due to vibration of the vehicle. Therefore, it is possible to avoid the influence of noise and heat by disposing the insulator 50 in each of the space between the cable 40 and the electronic component 35 and the space between the cable 40 and the cover 3.

FIG. 7 illustrates an example in which a connector 5 is arranged on a front surface of a signal processing substrate 21. In this case, in addition to the above-described assembly methods, the following method is also conceivable. First, an imaging substrate 20 and the signal processing substrate 21 are secured to a holding member 2. Then, a cable 40 is connected to the imaging substrate 20 and the signal processing substrate 21. Even in such a structure, bent parts 40a, 40b of the cable 40 exhibit the effect of improving workability and noise resistance.

The above example useful for understanding the present invention illustrates a case where the imaging substrate 20 is located in front of the signal processing substrate 21. However, a similar effect can be obtained even in a case where an imaging substrate 20 is located behind a signal processing substrate 21.

FIG. 8 illustrates a structure for connecting a connector 4 of an imaging substrate 20 and a connector 5 disposed on a rear surface of a signal processing substrate 21. In this structure, a bent part 40b disposed in a space S2 surrounded by the imaging substrate 20, the signal processing substrate 21, and a holding member 2 is provided on a cable 40. Therefore, the cable 40 is separated at a distance from the holding member 2 so as not to come into contact with the holding member 2.

FIG. 9 illustrates a structure for connecting a connector 4 of an imaging substrate 20 and a connector 5 arranged on a surface of the signal processing substrate 21, the surface closer to the imaging substrate. Bent parts 40a are provided at a plurality of locations. In addition, in the example of FIG. 9, the three bent parts 40a are disposed in a space S1 surrounded by the imaging substrate 20 and the signal processing substrate 21, and one bent part 40b is disposed in a space S2 surrounded by the imaging substrate 20, the signal processing substrate 21, and a holding member 2.

FIG. 10 is a connection diagram illustrating a case where a connector 4 of an imaging substrate 20 and a connector 5 disposed on a surface of a signal processing substrate 21, the surface closer to the imaging substrate 20, are disposed at locations overlapping each other in the vertical direction. The connected cable 40 is housed between the imaging substrate 20 and a holding member 2. Note that in this structure, the imaging substrate 20 overlaps the signal processing substrate 21, and therefore the depth dimension of the imaging device is reduced.

FIG. 11 illustrates a connecting structure in which a cable 40 is housed in a space S1 formed by an imaging substrate 20 and a signal processing substrate 21. According to this structure, it is possible to prevent the cable 40 from coming into contact with a holding member 2, the imaging substrate 20, and the signal processing substrate 21.

FIG. 12 illustrates a connecting structure in which the cable insertion direction into a connector 5 on a signal processing substrate 21 is opposite to that in the example illustrated in FIG. 9. In addition, FIG. 13 is a view in which a cable 40 extends from a connector 5, passes through an insertion hole 6 provided in a signal processing substrate 21, and is connected to a connector 4, as compared with the example illustrated in FIG. 12. In addition, FIG. 14 is a view in which a cable 40 extends from a connector 5 disposed on a surface of a signal processing substrate 21, the surface opposite to the surface of the signal processing substrate 21 closer to an imaging substrate 20, passes through an insertion hole 6, and is connected to a connector 4 on the imaging substrate 20.

Various methods for connecting the imaging substrate 20 and the signal processing substrate 21 by the cable 40 are conceivable in addition to the above-described methods. Structures expected to exhibit the above-described effect are not limited to those illustrated here.

Embodiments and examples useful for understanding the present invention of the present invention have been described above; however, the present invention is not limited to the above-described embodiments and examples useful for understanding the present invention, and can be appropriately changed without departing from the scope of the appended claims. For example, the present invention is not limited to a stereo camera. The present invention may also be applied to a so-called monocular camera including only one imaging element as long as the monocular camera has a structure in which an imaging substrate and a signal processing substrate are connected by a cable.

In addition, in the above-described embodiments and examples useful for understanding the present invention, the imaging device capable of adjusting the positional relationship between the imaging substrate and the optical system has been described as an example. However, the present invention is effective for an imaging device in which the relative positional relationship between an imaging substrate and an optical system is fixed. This is because workability of connecting a cable to the imaging substrate and a signal processing substrate can be a problem in a case where the imaging device has a structure in which the imaging substrate and the signal processing substrate are connected by the cable.

In addition, in the above-described embodiments and examples useful for understanding the present invention, the imaging device in which the securing parts to which the cable is connected are the connectors provided on the imaging substrate and the signal processing substrate has been described as an example. However, a securing part is not limited to a connector, and a cable may be secured by soldering or the like.

Furthermore, in the above-described embodiments and example useful for understanding the present invention, the imaging device including the securing parts to which the cable is secured and which are provided on the imaging substrate and the signal processing substrate has been described as an example. However, in an imaging device, one of an imaging substrate and a signal processing substrate (for example, the imaging substrate) may be integrated with a cable (or a flexible substrate), and a securing part which secures the cable may be provided only on the other substrate (for example, the signal processing substrate). The present invention is effective even in this case, since workability of adjusting the positional relationship between the imaging substrate and an optical system can be a problem in a case where the imaging device has a structure in which the positional relationship between the imaging substrate and the optical system can be adjusted.

### Reference Signs List

- 1: windshield
- 2: holding member
- 3: cover
- 4: connector
- 5: connector
- 6: insertion hole
- 10: imaging element
- 20: imaging substrate
- 21: signal processing substrate
- 30: imaging unit (left imaging unit)
- 31: imaging unit (right imaging unit)
- 32: power supply unit
- 33: video processing unit
- 34: recognition processing unit
- 40: cable
- 50: insulator

## Claims

1. An imaging device comprising:
an imaging substrate (20) which is provided with an imaging element (10);
a signal processing substrate (21) which processes a signal from the imaging element (10); a housing (2,3); and
a belt-shaped cable (40) which connects the imaging substrate (20) and the signal processing substrate (21), wherein
relative positions of the imaging substrate (20) and the signal processing substrate (21) can be adjusted,
a securing part to which an end of the belt-shaped cable (40) is secured is provided on at least one of the imaging substrate (20) and the signal processing substrate (21), and
the belt-shaped cable (40) has a bent part (40a, 40b) to which a bending tendency is given and which is provided in at least a portion between the both ends,
**characterized in that** Ltd.
an insulator (50) is disposed between the belt-shaped cable (40) and an electronic component on the signal processing substrate (21) and the belt-shaped cable (40) and a cover (3) of the housing (2,3).

2. The imaging device according to claim 1, wherein
the imaging substrate (20) and the signal processing substrate (21) are disposed so as to have a positional relationship in which regions in a longitudinal direction of the securing parts overlap each other in a crossing direction crossing the longitudinal direction.

3. The imaging device according to claim 1, wherein
the imaging substrate (20) and the signal processing substrate (21) are disposed such that planes along the imaging substrate (20) and the signal processing substrate (21) cross each other, and
the bent part (40a, 40b) is disposed in a space surrounded by the imaging substrate (20) and the signal processing substrate (21).

4. The imaging device according to claim 1, wherein
the imaging substrate (20) and the signal processing substrate (21) are disposed such that planes along the imaging substrate (20) and the signal processing substrate (21) cross each other, and
the bent part (40a, 40b) is disposed in a space surrounded by a housing and one of the imaging substrate (20) and the signal processing substrate (21).

5. The imaging device according to claim 1, further comprising at least the two bent parts (40a, 40b).

6. The imaging device according to claim 1, wherein the belt-shaped cable (40) is secured to the signal processing substrate (21) at one end, is directed toward the imaging substrate (20), is folded back before the imaging substrate (20), is directed away from the imaging substrate (20), is folded back again, and is secured to the imaging substrate (20) at another end.

7. The imaging device according to claim 5, wherein
at least one of the at least two bent parts (40a, 40b) is disposed in a space surrounded by the imaging substrate (20) and the signal processing substrate (21), and
another of the at least two bent parts (40a, 40b) is disposed in a space surrounded by a housing and one of the imaging substrate (20) and the signal processing substrate (21).

8. The imaging device according to claim 1, wherein the securing part of the signal processing substrate (21) is arranged on a surface of the signal processing substrate (21), the surface opposite to a surface of the signal processing substrate (21) which forms a space together with the imaging substrate 20).

9. The imaging device according to claim 1, further comprising a plurality of the imaging substrates (20), wherein
a relative position of each of the plurality of imaging substrates (20) with respect to the signal processing substrate (21) can be adjusted.

## Patentansprüche

1. Bildgebungsvorrichtung, die Folgendes umfasst:
ein Bildgebungssubstrat (20), das mit einem Bildgebungselement (10) ausgestattet ist;
ein Signalverarbeitungssubstrat (21), das ein Signal von dem Bildgebungselement (10) verarbeitet; ein Gehäuse (2, 3); und
ein bandförmiges Kabel (40), das das Bildgebungssubstrat (20) und das Signalverarbeitungssubstrat (21) verbindet, wobei
relative Positionen des Bildgebungssubstrats (20) und des Signalverarbeitungssubstrats (21) angepasst werden können,
wobei ein Sicherungsteil, an dem ein Ende des bandförmigen Kabels (40) befestigt ist, auf dem Bildgebungssubstrat (20) und/oder dem Signalverarbeitungssubstrat (21) vorgesehen ist, und
das bandförmige Kabel (40) einen gebogenen Teil (40a, 40b) besitzt, dem eine Biegungstendenz gegeben ist und der zumindest in einem Teil zwischen den beiden Enden vorgesehen ist,
**dadurch gekennzeichnet, dass**
ein Isolator (50) zwischen dem bandförmigen Kabel (40) und einer elektronischen Komponente auf dem Signalverarbeitungssubstrat (21) und dem bandförmigen Kabel (40) und einer Abdeckung (3) des Gehäuses (2, 3) angeordnet ist.

2. Bildgebungsvorrichtung nach Anspruch 1, wobei
das Bildgebungssubstrat (20) und das Signalverarbeitungssubstrat (21) so angeordnet sind, dass sie eine Positionsbeziehung besitzen, in der Bereiche in einer Längsrichtung der Sicherungsteile einander in einer Kreuzungsrichtung, die die Längsrichtung kreuzt, überdecken.

3. Bildgebungsvorrichtung nach Anspruch 1, wobei
das Bildgebungssubstrat (20) und das Signalverarbeitungssubstrat (21) derart angeordnet sind, dass Ebenen entlang des Bildgebungssubstrats (20) und des Signalverarbeitungssubstrats (21) einander kreuzen, und
der Biegungsteil (40a, 40b) in einem Raum umgeben von dem Bildgebungssubstrat (20) und dem Signalverarbeitungssubstrat (21) angeordnet ist.

4. Bildgebungsvorrichtung nach Anspruch 1, wobei
das Bildgebungssubstrat (20) und das Signalverarbeitungssubstrat (21) derart angeordnet sind, dass Ebenen entlang des Bildgebungssubstrats (20) und des Signalverarbeitungssubstrats (21) einander kreuzen, und
der gebogene Teil (40a, 40b) in einem Raum umgeben von einem Gehäuse und dem Bildgebungssubstrat (20) und/oder dem Signalverarbeitungssubstrat (21) angeordnet ist.

5. Bildgebungsvorrichtung nach Anspruch 1, die ferner zumindest die zwei gebogenen Teile (40a, 40b) umfasst.

6. Bildgebungsvorrichtung nach Anspruch 1, wobei das bandförmige Kabel (40) an dem Signalverarbeitungssubstrat (21) an einem Ende befestigt wird, in Richtung des Bildgebungssubstrats (21) geführt wird, vor dem Bildgebungssubstrat (20) zurückgefaltet wird, von dem Bildgebungssubstrat (2) weggeführt wird, wieder zurückgefaltet wird und an dem Bildgebungssubstrat (20) an einem anderen Ende befestigt wird.

7. Bildgebungsvorrichtung nach Anspruch 5, wobei
mindestens einer der mindestens zwei gebogenen Teile (40a, 40b) in einem Raum umgeben von dem Bildgebungssubstrat (20) und dem Signalverarbeitungssubstrat (21) angeordnet ist und
ein anderer der mindestens zwei gebogenen Teile (40a, 40b) in einem Raum umgeben von einem Gehäuse und dem Bildgebungssubstrat (20) und/oder dem Signalverarbeitungssubstrat (21) angeordnet ist.

8. Bildgebungsvorrichtung nach Anspruch 1, wobei der Sicherungsteil des Signalverarbeitungssubstrats (12) auf einer Fläche des Signalverarbeitungssubstrats (21) angeordnet ist, wobei die Fläche einer Fläche des Signalverarbeitungssubstrats (21), die einen Raum zusammen mit dem Bildgebungssubstrat (20) bildet, gegenüberliegt.

9. Bildgebungsvorrichtung nach Anspruch 1, die ferner mehrere der Bildgebungssubstrate (20) umfasst, wobei
eine relative Position jedes der mehreren Bildgebungssubstrate (20) in Bezug auf das Signalverarbeitungssubstrat (21) angepasst werden kann.

## Revendications

1. Dispositif d'imagerie comprenant :
un substrat d'imagerie (20) qui est doté d'un élément d'imagerie (10) ;
un substrat de traitement de signal (21) qui traite un signal provenant de l'élément d'imagerie (10) ;
un boîtier (2, 3) ; et
un câble en forme de courroie (40) qui connecte le substrat d'imagerie (20) et le substrat de traitement de signal (21), dans lequel des positions relatives du substrat d'imagerie (20) et du substrat de traitement de signal (21) peuvent être ajustées,
une partie de fixation à laquelle est fixée une extrémité du câble en forme de courroie (40) est prévue sur au moins un substrat parmi le substrat d'imagerie (20) et le substrat de traitement de signal (21), et
le câble en forme de courroie (40) a une partie courbée (40a, 40b) à laquelle est imposée une tendance de courbure et qui est prévue dans au moins une portion entre les deux extrémités,
**caractérisé en ce que**
un isolant (50) est disposé entre le câble en forme de courroie (40) et un composant électronique sur le substrat de traitement de signal (21) et le câble en forme de courroie (40) et un couvercle (3) du boîtier (2, 3).

2. Dispositif d'imagerie selon la revendication 1, dans lequel
le substrat d'imagerie (20) et le substrat de traitement de signal (21) sont disposés de manière à avoir une relation de position dans laquelle des régions dans une direction longitudinale des parties de fixation se chevauchent mutuellement dans une direction transversale croisant la direction longitudinale.

3. Dispositif d'imagerie selon la revendication 1, dans lequel
le substrat d'imagerie (20) et le substrat de traitement de signal (21) sont disposés de sorte que des plans le long du substrat d'imagerie (20) et du substrat de traitement de signal (21) se croisent mutuellement, et
la partie courbée (40a, 40b) est disposée dans un espace entouré par le substrat d'imagerie (20) et le substrat de traitement de signal (21).

4. Dispositif d'imagerie selon la revendication 1, dans lequel
le substrat d'imagerie (20) et le substrat de traitement de signal (21) sont disposés de sorte que des plans le long du substrat d'imagerie (20) et du substrat de traitement de signal (21) se croisent mutuellement, et
la partie courbée (40a, 40b) est disposée dans un espace entouré par un boîtier et un substrat parmi le substrat d'imagerie (20) et le substrat de traitement de signal (21).

5. Dispositif d'imagerie selon la revendication 1, comprenant en outre au moins les deux parties courbées (40a, 40b).

6. Dispositif d'imagerie selon la revendication 1, dans lequel le câble en forme de courroie (40) est fixé au substrat de traitement de signal (21) à une extrémité, est dirigé vers le substrat d'imagerie (20), est replié en arrière avant le substrat d'imagerie (20), est dirigé en éloignement du substrat d'imagerie (20), est à nouveau replié en arrière, et est fixé au substrat d'imagerie (20) à l'autre extrémité.

7. Dispositif d'imagerie selon la revendication 5, dans lequel
au moins une desdites au moins deux partie courbées (40a, 40b) est disposée dans un espace entouré par le substrat d'imagerie (20) et le substrat de traitement de signal (21), et
une autre desdites au moins deux parties courbées (40a, 40b) est disposée dans un espace entouré par un boîtier et un substrat parmi le substrat d'imagerie (20) et le substrat de traitement de signal (21).

8. Dispositif d'imagerie selon la revendication 1, dans lequel la partie de fixation du substrat de traitement de signal (21) est agencée sur une surface du substrat de traitement de signal (21), la surface opposée à une surface du substrat de traitement de signal (21) formant un espace conjointement avec le substrat d'imagerie (20).

9. Dispositif d'imagerie selon la revendication 1, comprenant en outre une pluralité de substrats d'imagerie (20), dans lequel
une position relative de chaque substrat parmi la pluralité de substrats d'imagerie (20) par rapport au substrat de traitement de signal (21) peut être ajustée.
